# EUROPÄISCHE PATENTSCHRIFT

(11) **EP 3 174 444 B1**
(45) Veröffentlichungstag und Bekanntmachung des Hinweises auf die Patenterteilung: **17.10.2018**
(21) Anmeldenummer: 15744558.6
(22) Anmeldetag: 29.07.2015
(51) Int. Cl.: A47J 43/07

(54) **ELEKTRISCHES KÜCHENGERÄT**
ELECTRICAL KITCHEN APPLIANCE
APPAREIL DE CUISINE ÉLECTRIQUE

(30) Priorität: 30.07.2014 DE 102014110831; 25.08.2014 DE 102014112114
(43) Veröffentlichungstag der Anmeldung: 07.06.2017
(73) Patentinhaber: Vorwerk & Co. Interholding GmbH, 42275 Wuppertal (DE)
(72) Erfinder: SCHOMACHER, Jutta, 42489 Wuelfrath (DE); KRAUT-REINKOBER, Stefan, 51375 Leverkusen (DE); SAUERWALD, Andres, 46238 Bottrop (DE); LANG, Torsten, 42657 Solingen (DE); HACKERT, Georg, 44869 Bochum (DE)
(74) Vertreter: Müller, Enno
(86) Internationale Anmeldenummer: PCT/EP2015/067429
(87) Internationale Veröffentlichungsnummer: WO 2016/016333

(56) Entgegenhaltungen:
- EP-A1- 2 832 275
- WO-A1-2014/083029

## Beschreibung

Die Erfindung betrifft ein elektrisches Küchengerät zur Herstellung von Speisen, vorzugsweise nach vorbestimmten Rezepten, mit einer Ausgabeschnittstelle zur Ausgabe von Informationsdaten an einen Benutzer und einer Eingabeschnittstelle zur Eingabe von Steuerbefehlen zum Steuern des elektrischen Küchengeräts durch den Benutzer, wobei die Informationsdaten in einem mit dem elektrischen Küchengerät verbundenen Speicher abgelegt sind.

Ein derartiges Küchengerät ist z.B. in der Druckschrift WO-A-2014/083029 offenbart. Derartige elektrische Küchengeräte sind z.B. in Form von universellen Küchenmaschinen bekannt, die neben einem mechanischen Verarbeiten von Nahrungsmitteln, z.B. mittels eines Rückwerks oder Schneidmessers, auch ein Garen der Nahrungsmittel ermöglichen. Zur Herstellung einer entsprechenden Speise sind häufig vorbestimmte Rezepte vorgesehen, die mehrere, aufeinanderfolgende Rezeptschritte aufweisen. Um dem Benutzer eines derartigen elektrischen Küchengeräts das Herstellen einer Speise nach einem derartigen vorbestimmten Rezept zu erleichtern, können derartige Geräte eine Ausgabeschnittstelle zur Ausgabe von Informationen an einen Benutzer aufweisen. Mittels dieser Ausgabeschnittstelle kann der Benutzer z.B. aufgefordert werden, eine bestimmte Menge eines vorbestimmten Nahrungsmittels in das Gerät zu geben, eine bestimmte Rührstufe einzustellen und/oder eine bestimmte Garstufe zu wählen. Zum Eingeben entsprechender Steuerbefehle, mit der das elektrische Küchengerät gesteuert wird, kann eine Eingabeschnittstelle vorgesehen sein, z.B. in Form eines Touchscreens.
Während in der Vergangenheit derartige elektrische Küchengeräte zur Ausgabe von Informationen an den Benutzer häufig mit einfachen Symbolen ausgekommen sind und auch Knöpfe zur Eingabe von Steuerbefehlen mit entsprechenden einfachen Symbolen gekennzeichnet waren, erfordert das Nachkochen von komplexeren Rezepten detailliertere Anweisungen, für die einfache Symbole häufig nicht geeignet sind. Insbesondere bei der Ausgabe von Befehlen in Textform stellt sich jedoch das Problem, dass je nach lokalem Einsatzgebiet unterschiedliche Sprachen gefordert sind. Darüber hinaus weisen Rezeptdatenbanken für derartige elektrische Küchengeräte häufig eine derartige Vielzahl von Rezepten auf, die es dem Benutzer schwer macht, ein für ihn passendes Rezept zu finden.

Ausgehend davon ist es die Aufgabe der Erfindung, ein derartiges elektrisches Küchengerät anzugeben, das eine automatische Anpassung an die Bedürfnisse unterschiedlicher Benutzer ermöglicht.

Diese Aufgabe ist durch den Gegenstand des Patentanspruchs 1 gelöst. Bevorzugte Ausführungsformen sind in den Unteransprüchen beschrieben.

Die Erfindung liegt damit also in einem elektrischen Küchengerät zur Herstellung von Speisen, vorzugsweise nach vorbestimmten Rezepten, mit einer Ausgabeschnittstelle zur Ausgabe von Informationsdaten an einen Benutzer und einer Eingabeschnittstelle zur Eingabe von Steuerbefehlen zum Steuern des elektrischen Küchengeräts durch den Benutzer, wobei die Informationsdaten in einem mit dem elektrischen Küchengerät verbundenen Speicher abgelegt sind, dadurch gekennzeichnet, dass wenigstens einem Teil der Informationsdaten in dem Speicher jeweils ein Zeitdatum und/oder ein Ortsdatum zugeordnet ist und eine Erfassungseinrichtung und eine Auswahleinrichtung vorgesehen sind, wobei mit der Erfassungseinrichtung Zeitdaten und/oder Ortsdaten erfassbar sind und die Auswahleinrichtung mit dem Speicher und der Erfassungseinrichtung verbunden und ferner derart ausgestaltet ist, dass sie automatisch nur derartige Informationsdaten aus dem Speicher auswählt und zulässt, die wenigstens ein Datum der erfassten Zeitdaten bzw. Ortsdaten aufweisen.

Mit dem Begriff "Informationen" werden vorliegend derartige Daten bezeichnet, die einem Benutzer des erfindungsgemäßen Küchengeräts Informationen zur Benutzung des Küchengeräts liefern können, z.B. im Rahmen der Abarbeitung eines Kochrezeptes. Die Begriffe "Informationen" einerseits und "Informationsdaten" andererseits werden vorliegend also im selben Sinn benutzt. Die den Informationen entsprechenden Daten stellen also Informationsdaten dar, in Abgrenzung zu den angesprochenen Ortsdaten bzw. Zeitdaten, die ihrerseits den in dem Speicher abgelegten Informationsdaten zugeordnet sein können, so dass die Informationsdaten jeweils wenigstens ein weiteres Datum, praktisch in Form eines Metadatums, aufweisen können.

Zeitdatum meint vorliegend alle Daten, die einen absoluten oder relativen Zeitpunkt oder eine absolute bzw. relative Zeitdauer definieren. Ein Zeitdatum kann also sein: "Ostersonntag", "Freitags", "abends, nämlich in der Zeit zwischen 17 und 21 Uhr", "3. Oktober" usw. Unter Ortsdatum werden gemäß der vorliegenden Erfindung alle derartigen Daten verstanden, die in irgendeiner Form einen Bezug zu einem Ort herstellen. Ein Ortsdatum kann also sein: "Deutschland", "Südostasien", "Bayern", "Berlin" usw.

Mit der Erfassungseinrichtung sind nun Zeitdaten und/oder Ortsdaten erfassbar, insbesondere nämlich Zeitdaten bzw. Ortsdaten, die zum aktuellen Standort des elektrischen Küchengeräts gehören. Mit der Erfassungseinrichtung ist somit z.B. erfassbar, dass es Ostersonntag ist und das elektrische Küchengerät an einem Standort in Deutschland aufgestellt ist. Mit diesen beiden Metadaten "Ostersonntag" und "Deutschland" lässt die Auswahleinrichtung nur derartige Informationsdaten aus dem Speicher zur Ausgabe zu, die als Metadatum wenigstens auch "Ostersonntag" bzw. "Deutschland" aufweisen.

Insgesamt wird es damit ermöglicht, dem Benutzer gezielt derartige Informationsdaten zur Verfügung zu stellen, die aufgrund einer entsprechenden Kennzeichnung mit Orts- bzw. Zeit-Metadaten zum aktuellen Aufstellungsort des elektrischen Küchengeräts passen. Bei dem zuvor genannten Beispiel "Ostersonntag" in "Deutschland" kann damit dem Benutzer eine derartige Auswahl an Rezepten angeboten werden, die zuvor mit den Metadaten "Ostersonntag" bzw. "Deutschland" versehen worden sind, z.B. weil es sich um deutsche Gerichte handelt bzw. um Ostergerichte.

Die Erfassungseinrichtung, mit der die Zeitdaten bzw. Ortsdaten erfassbar sind, kann unterschiedlich ausgestaltet sein, solange sie nur mit einem System in Kontakt treten kann, das grundsätzlich die Bereitstellung eines Ortsdatums bzw. eines Zeitdatums ermöglicht. So ist vorzugsweise vorgesehen, dass die Erfassungseinrichtung eine Telefonschnittstelle, eine Internet-Schnittstelle und/oder eine GPS-Schnittstelle aufweist. Über eine Telefonschnittstelle ist ein Zugang zu einem Telefonnetz möglich, wie zu einem öffentlichen Telefonnetz (PSTN), in dem im Allgemeinen auch aktuelle Zeitdaten verfügbar sind. Insbesondere bei einem Kontakt zu einem Mobilfunknetz ist auch eine Bestimmung des Ortes, zumindest in einem gewissen lokalen Bereich, möglich. Entsprechendes gilt für eine Internet-Schnittstelle, über die Zeit-Server erreichbar sind und die über den lokalen Zugang zum Internet, ebenfalls in einem bestimmten Bereich, eine lokale Identifizierung ermöglichen. Entsprechendes gilt für die gut bekannte GPS-Technik.

Grundsätzlich kann vorgesehen sein, dass die Auswahleinrichtung immer aktiv ist, so dass sie stets nur die Auswahl und Ausgabe derartiger Informationsdaten aus dem Speicher ermöglicht, die wenigstens ein Datum der erfassten Zeitdaten bzw. Ortsdaten aufweisen. Gemäß einer bevorzugten Weiterbildung der Erfindung ist jedoch eine vom Benutzer aktivierbare Auswahleinrichtung vorgesehen, die derart ausgestaltet ist, dass nur nach Aktivierung der Auswahleinrichtung durch den Benutzer eine Auswahl von Informationsdaten durch die Auswahleinrichtung ermöglicht ist. Somit kann der Benutzer gezielt steuern, ob er grundsätzlich von allen im Speicher vorhandenen Informationsdaten profitieren will oder ob er eine Vorauswahl dadurch erreichen will, dass nur derartige Informationsdaten aus dem Speicher für eine Auswahl und Ausgabe zulässig sind, die wenigstens ein Datum der erfassten Zeitdaten bzw. Ortsdaten aufweisen.

Im vorgenannten Beispiel mit den beiden Metadaten "Ostersonntag" und "Deutschland" ermöglicht diese bevorzugte Weiterbildung der Erfindung dem Benutzer am Ostersonntag das elektrische Küchengerät ganz normal mit seinem gesamten Informationsgehalt zu benutzen oder aber gezielt, indem er sich z.B. nur zu Ostern passende deutsche Landesgerichte anbieten lässt. In diesem Zusammenhang ist es besonders bevorzugt, dass die Auswahleinrichtung eine getrennte Auswahl nach Zeitdaten einerseits und Ortsdaten andererseits vorsieht. Das bedeutet, dass die Auswahleinrichtung vom Benutzer derart ansteuerbar ist, dass sie z.B. entweder nur Zeitdaten oder nur Ortsdaten oder gezielt sowohl Zeitdaten als auch Ortsdaten für die Auswahl zur zulässigen Ausgabe von Informationsdaten aus dem Speicher verwendet.

Grundsätzlich ist es ausreichend, dass der Speicher mit den Informationsdaten mit dem elektrischen Küchengerät lediglich verbunden ist. Gemäß einer bevorzugten Weiterbildung der Erfindung ist jedoch vorgesehen, dass der Speicher im oder am elektrischen Küchengerät vorgesehen ist. Dabei ist es grundsätzlich möglich, dass der Speicher vollständig mit den Informationsdaten gefüllt ist, die dem Benutzer von dem elektrischen Küchengerät zur Verfügung gestellt werden soll. Besonders bevorzugt ist es jedoch, dass der Speicher in bzw. am Küchengerät ein Zwischenspeicher zum temporären Halten von Daten ist, der mit einem entfernten Speicher zum Austausch der Informationsdaten verbindbar ist. In diesem Zusammenhang ist z.B. vorgesehen, dass alle Informationsdaten, die zu dem elektrischen Küchengerät gehören und von diesem grundsätzlich angeboten werden könnten, in einem Speicher eines entfernten Servers abgelegt sind, mit dem das elektrische Küchengerät vorzugsweise über das Internet verbindbar ist.

Auf diese Weise können z.B. nur Teile dieser Informationsdaten abgerufen werden, die für den entsprechenden Benutzer interessant sind. Selbst wenn von dem entfernten Server alle Informationsdaten abgerufen und temporär, also für eine bestimmte Zeit, auf dem Speicher am bzw. im Küchengerät abgespeichert werden, ist die Verbindung zu dem entfernten Server insofern vorteilhaft, als dass Informationsdaten von dort lokal am Gerät immer nachgeführt werden können, z.B. in Form von regelmäßigen Updates.

Das temporäre Halten von Daten auf dem Zwischenspeicher kann bedeuten, dass diese Daten nach dem Ausschalten des elektrischen Küchengerätes automatisch gelöscht werden. Gemäß einer bevorzugten Weiterbildung der Erfindung sind die Daten jedoch solange auf dem am bzw. im elektrischen Küchengerät vorgesehenen Zwischenspeicher vorhanden, bis diese aktiv gelöscht werden, z.B. vom Benutzer oder aus der Ferne über den entfernten Server.

Weiterhin ist gemäß einer bevorzugten Weiterbildung der Erfindung vorgesehen, dass die den Informationsdaten zugeordneten Ortsdaten Landesdaten sind, wobei die Sprache, in der die jeweiligen Informationsdaten gefasst sind, eine Landessprache des den Landesdaten entsprechenden Landes ist. Diese Ausführungsform ermöglicht mittels der Erfassung des Aufstellungsortes des Küchengeräts automatisch, alle Informationsdaten, wie die Rezeptdaten als auch erforderliche Steuerbefehle in der jeweiligen Landessprache anzuzeigen, ohne dass dazu bei der Auslieferung des Gerätes oder nach Auslieferung des Gerätes vom Benutzer entsprechende Einstellungen vorgenommen werden müssen. Dies stellt eine erhebliche Erleichterung bei der Installation des Gerätes dar, da zumindest hinsichtlich der Betriebssprache kein entsprechender Abfragedialog oder eine entsprechende Eingabe am Gerät erforderlich ist.

Gemäß einer anderen weiter bevorzugten Weiterbildung der Erfindung sind die Informationsdaten Rezeptinformationen und die den Rezeptinformationen zugeordneten Ortsdaten sind Regionaldaten, wobei die Herkunft des jeweiligen Rezeptes der Region entspricht, auf das das jeweilige Regionaldatum hinweist. Auf diese Weise wird die Ausgabe von regionalen Rezepten ermöglicht, wie deutschen Landesspezialitäten, bayerischen Gerichten oder besonderen Gerichten, für die eine Stadt oder Region bekannt ist.

Außerdem ist gemäß einer bevorzugten Weiterbildung der Erfindung vorgesehen, dass die Informationsdaten Rezeptinformationen sind und die den Rezeptinformationen zugeordneten Zeitdaten saisonale Daten sind, die einen vorbestimmten Zeitraum innerhalb eines Kalenderjahres umfassen. Auf diese Weise können, passend zur Jahreszeit, z.B. herbstliche Gerichte angeboten werden oder Rezepte für Wildgerichte, wenn man sich in der entsprechenden Saison befindet.

Die Erfindung wird nachfolgend anhand eines bevorzugten Ausführungsbeispiels unter Bezugnahme auf die Zeichnung näher erläutert.

In der Zeichnung zeigt
- Fig. 1: schematisch den Aufbau eines elektrischen Küchengeräts gemäß einem bevorzugten Ausführungsbeispiel der Erfindung, das über das Internet mit einem entfernten Server zum Austausch von Informationsdaten und einem Zeit-Server zur Erfassung von Zeitdaten verbunden ist,
- Fig. 2: schematisch den Aufbau des Speichers des elektrischen Küchengeräts gemäß dem bevorzugten Ausführungsbeispiel der Erfindung mit Informationsdaten, Zeitdaten und Ortsdaten, und
- Fig. 3: schematisch die Funktionsweise der Erfassungseinrichtung des elektrischen Küchengeräts gemäß dem bevorzugten Ausführungsbeispiel der Erfindung.

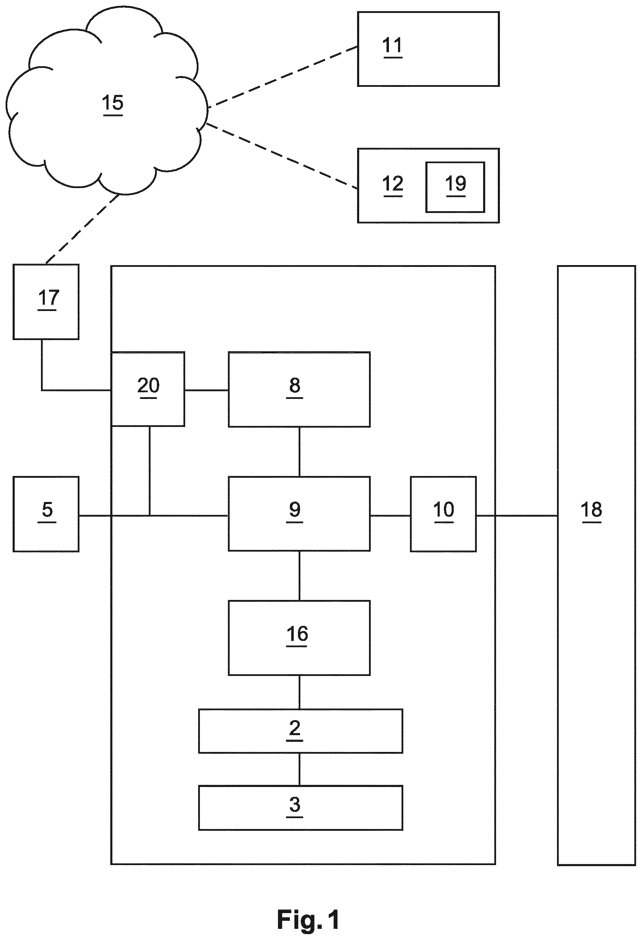

Aus Fig. 1 ist schematisch der Aufbau eines elektrischen Küchengeräts gemäß einem bevorzugten Ausführungsbeispiel der Erfindung ersichtlich. Das elektrische Küchengerät 1 weist eine Ausgabeschnittstelle 2 zur Ausgabe von Informationsdaten 4 an einen Benutzer und eine Eingabeschnittstelle 3 zur Eingabe von Steuerbefehlen zum Steuern des elektrischen Küchengeräts 1 durch den Benutzer auf. Ferner ist ein Speicher 5 vorgesehen, der mit dem elektrischen Küchengerät 1 verbunden ist. In dem elektrischen Küchengerät 1 ist eine mit dem Speicher 5 verbindbare Auswahleinrichtung 9 vorgesehen, die ihrerseits mit einer Aktivierungseinrichtung 10 sowie mit einer Erfassungseinrichtung 8 verbunden ist.

Das elektrische Küchengerät 1 gemäß dem vorliegend beschriebenen bevorzugten Ausführungsbeispiel der Erfindung dient zur Herstellung von Speisen nach vorbestimmten Rezepten. Dazu ist das elektrische Küchengerät 1 mit einer Verarbeitungseinheit 18 versehen, die einen Behälter zur Aufnahme der zu verarbeitenden Nahrungsmittel mit einem Rührwerk, einem Schneidmesser und einer Gareinrichtung aufweist. Diese Verarbeitungseinheit 18 entspricht im Wesentlichen dem, was bei herkömmlichen elektrischen Küchengeräten zur Verarbeitung der Nahrungsmittel vorgesehen ist. Daher sind die einzelnen Bestandteile der Verarbeitungseinheit 18, wie Behälter, Rührwerk, Schneidmesser und Gareinheit nicht weiter im Detail dargestellt.

Die Steuerung des elektrischen Küchengeräts 1, also sowohl die Ansteuerung der oben genannten Einrichtungen der Verarbeitungseinheit 18 sowie die Steuerung und Verknüpfung der Ausgabeschnittstelle 2, der Eingabeschnittstelle 3 sowie von Erfassungseinrichtung 8 und Auswahleinrichtung 9 erfolgt über eine zentrale Steuereinrichtung 16 (CPU). Mittels der zentralen Steuereinrichtung 16 werden über die Eingabeschnittstelle 3 eingegebenen Steuerbefehle im elektrischen Küchengerät 1 derart verarbeitet und an den entsprechenden Adressaten weitergegeben, dass im Ergebnis die gewünschte Verarbeitung der Nahrungsmittel in der Verarbeitungseinheit 18 erfolgen kann. Im Zusammenwirken mit der Erfassungseinrichtung 8 und der Auswahleinrichtung 9 steuert die zentrale Steuereinrichtung 16 außerdem die Anzeige auf der Ausgabeschnittstelle 2 im Hinblick auf die darüber auszugebenden Informationsdaten 4 für den Benutzer.

Wie weiterhin aus Fig. 1 ersichtlich, ist das elektrische Küchengerät über das Internet 15 mit einem entfernten Server 12 sowie mit einem Zeit-Server 11 verbunden. Der entfernte Server 12 weist einen Speicher 19 auf, der mit einer Vielzahl von Informationsdaten 4 versehen ist. Über das Internet 15 können diese Informationsdaten 4 mit dem am elektrischen Küchengerät 1 vorgesehenen Speicher 5 ausgetauscht werden.

Zur Verbindung mit dem Internet 15 weist das elektrische Küchengerät 1 gemäß dem vorliegend beschriebenen bevorzugten Ausführungsbeispiel der Erfindung eine Internet-Schnittstelle 20 auf. Diese ist ihrerseits mit einem Internet-Router 17 verbunden, der für das elektrische Küchengerät 1 den Zugang zum Internet 15 bereitstellt. Der Speicher 5 ist von dem elektrischen Küchengerät 1 entfernbar bzw. an diesem anbringbar, wobei gemäß dem vorliegend beschriebenen bevorzugten Ausführungsbeispiel der Erfindung der Speicher 5 gemäß der bekannten USB-Technologie ausgestaltet ist. Wie schon angesprochen, kann der Speicher 5 über die Internet-Schnittstelle 20 über das Internet mit dem entfernten Server 12 verbunden werden. Insofern ist es möglich, dass der Speicher 5 aus dem Speicher 19 des entfernten Servers 12 Daten erhält, die dann zumindest temporär im Speicher 5 abgelegt werden können.

Auf diese Weise muss zum Betrieb des elektrischen Küchengeräts 1 gemäß dem bevorzugten Ausführungsbeispiel der Erfindung keine ständige Verbindung zum Internet 15 und damit zum entfernten Server 12 mit dessen Speicher 19 bestehen. Das elektrische Küchengerät 1 kann also im "Stand alone"-Betrieb betrieben werden. Ist das elektrische Küchengerät 1 jedoch mit dem Internet 15 verbunden, so kann über den entfernten Server 12 der Inhalt des Speichers 5 verändert werden, so dass z.B. neue Rezeptdaten heruntergeladen werden können bzw. ein Update des Speichers 5 erfolgen kann.

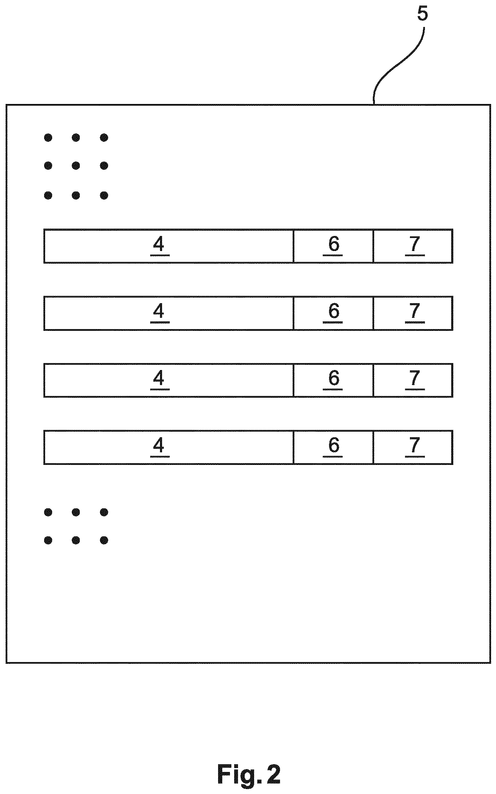

Die Struktur der im Speicher 5 abgelegten Daten ist, zumindest für einen Teil der Daten, in Fig. 2 schematisch dargestellt. Dort ist gezeigt, dass eine Mehrzahl von Informationsdaten 4 im Speicher 5 abgelegt sind, wobei diesen Informationsdaten 4, praktisch in Form von "Metadaten", weitere Daten zugeordnet sind, nämlich jeweils ein Zeitdatum 6 und ein Ortsdatum 7. Dabei werden mit dem Begriff "Zeitdatum" derartige Daten gemeint, die einen absoluten oder relativen Zeitpunkt oder eine absolute bzw. relative Zeitdauer definieren, wie "Ostersonntag", "Freitag" usw. Unter dem Begriff "Ortsdatum" werden derartige Daten verstanden, die einen Bezug zu einem Ort herstellen, wie "Deutschland", "Bayern", "Berlin" usw.

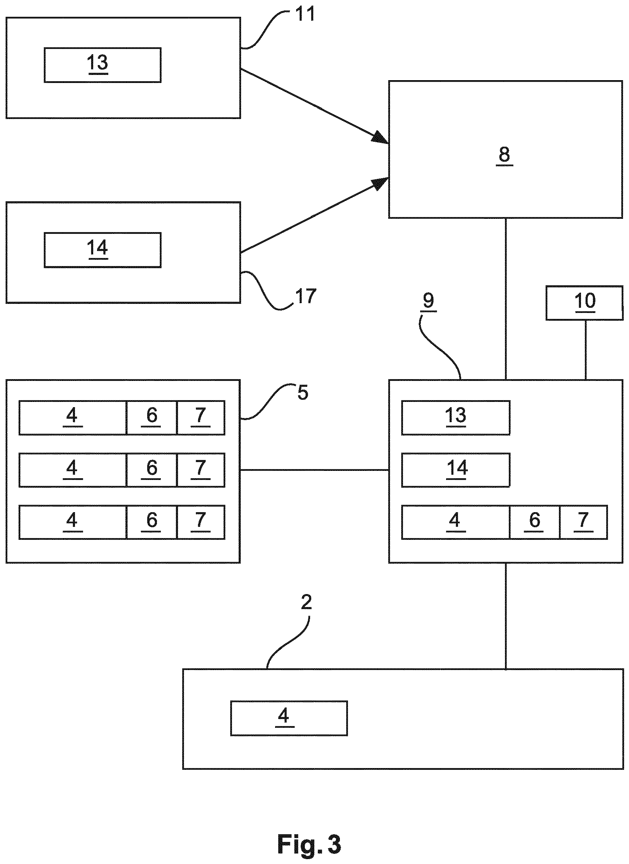

Zu den Informationsdaten 4 einerseits und den Zeitdaten 6 sowie Ortsdaten 7 andererseits gilt nun Folgendes: Die Informationsdaten 4 umfassen derartige Daten, die z.B. für die Abarbeitung eines in dem Speicher 5 gespeicherten Rezeptes zur Verarbeitung von Nahrungsmitteln in der Verarbeitungseinheit 18 des elektrischen Küchengeräts 1 erforderlich sind. Derartige Informationsdaten können an den Benutzer des elektrischen Küchengeräts 1 über die Ausgabeschnittstelle 2, z.B. in Textform, ausgegeben werden und dabei lauten: "Rührstufe 4 wählen", "100°C einstellen" oder "100 g Zucker hinzufügen". Diese Informationen dienen also dem Benutzer des elektrischen Küchengeräts 1 gemäß dem vorliegend beschriebenen bevorzugten Ausführungsbeispiel der Erfindung zur Abarbeitung eines in dem Speicher 5 abgespeicherten Rezeptes. Um den persönlichen Bedürfnissen des Benutzers noch weiter entsprechen zu können, ist nun ein Betrieb des elektrischen Küchengeräts 1 gemäß dem bevorzugten Ausführungsbeispiel der Erfindung vorgesehen, wie schematisch in Fig. 3 dargestellt.

Für die weitere Anpassung des elektrischen Küchengeräts 1 gemäß dem vorliegend beschriebenen bevorzugten Ausführungsbeispiel der Erfindung an die Bedürfnisse seines Benutzers spielen die Erfassungseinrichtung 8 und die Auswahleinrichtung 9 eine wesentliche Rolle. Mit der Erfassungseinrichtung 8 können nämlich aktuelle Zeitdaten 13 erfasst werden, wie die aktuelle Uhrzeit am Aufstellungsplatz des elektrischen Küchengeräts 1 sowie das aktuelle Datum, aus dem wiederum der aktuelle Wochentag und z.B. die jeweilige Jahreszeit abgeleitet werden können. Darüber hinaus kann z.B. erfasst werden, ob der aktuelle Tag ein Feiertag ist.

Insbesondere bei der Bestimmung eines Feiertags ist es natürlich maßgeblich, wo das elektrische Küchengerät 1 gemäß dem bevorzugten Ausführungsbeispiel der Erfindung aufgestellt ist. Dazu ist die Erfassungseinrichtung 8 zusätzlich in der Lage, aktuelle Ortsdaten 14 zu erfassen, wie ein Land, eine Region oder auch eine Stadt. Gemäß dem vorliegenden bevorzugten Ausführungsbeispiel der Erfindung erfolgt diese Erfassung aktueller Ortsdaten 14 über den Internet-Router 17, über den das elektrische Küchengerät 1 mit dem Internet 15 verbunden ist. Ähnlich wie beim Einbuchen in eine Kommunikationszelle eines Mobilfunknetzes ist es beim Zugang in das Internet im Allgemeinen so, dass ein Internet-Router 17 verwendet wird, der sich in der Nähe des Teilnehmers befindet, der Zugang zum Internet 15 wünscht, vorliegend also dem elektrischen Küchengerät 1. Damit ist es auf diese Weise, zumindest mit einer gewissen Unschärfe, möglich, über den Internet-Router 17 ein aktuelles Ortsdatum 14 zum Aufstellungsort des elektrischen Küchengeräts 1 zu erfassen.

Die Erfassung aktueller Zeitdaten 13 ist über einen Zeit-Server 11 möglich, der ebenfalls über das Internet 15 erreichbar ist. Derartige Zeit-Server existieren von unterschiedlichen Betreibern und liefern in der Regel sekundengenau die aktuelle Zeit für jeden Ort auf der Welt. In Verbindung mit dem Aufstellungsort des elektrischen Küchengeräts 1, der über die aktuellen Ortsdaten 14 mittels des Internet-Routers 17 erfasst worden sind, können auf diese Weise auch aktuelle Zeitdaten 13 für das elektrische Küchengerät 1 ermittelt werden.

Mit diesen Informationen, also den aktuellen Zeitdaten 13 und den aktuellen Ortsdaten 14, kann die Erfassungseinrichtung 8 nun die Auswahleinrichtung 9 versehen; die aktuellen Zeitdaten 13 und die aktuellen Ortsdaten 14 werden an die Auswahleinrichtung 9 übertragen. Die Auswahleinrichtung 9 ist jedoch nicht nur mit der Erfassungseinrichtung 8 verbunden, sondern auch mit dem am elektrischen Küchengerät 1 vorgesehenen Speicher 5, in dem die Informationsdaten 4, wie zuvor beschrieben, abgelegt sind.

Das weitere Verfahren in der Auswahleinrichtung 9 ist nun derart, dass diese auf Aktivierung durch den Benutzer des elektrischen Küchengeräts 1 hin einen Vergleich der aktuellen Zeitdaten 13 und/oder der aktuellen Ortsdaten 14 mit den Zeitdaten 6 bzw. Ortsdaten 7 vornimmt, die den Informationsdaten 4 im Speicher 5 als Metadaten zugeordnet sind. Ein derartiger Vergleich und damit eine selektive Auswahl der in dem Speicher 5 abgelegten Informationsdaten 4 initiiert der Benutzer des elektrischen Küchengeräts 1 über die Aktivierungseinrichtung 10, die mit der Auswahleinrichtung 9 verbunden ist. Konkret kann der Benutzer über die Aktivierungseinrichtung 10 einstellen, ob überhaupt eine Auswahl und dafür ein Vergleich der aktuellen Zeitdaten 13 bzw. der aktuellen Ortsdaten 14 mit dem Metadaten-Zeitdatum 6 und Ortsdatum 7 zu den Informationsdaten 4 im Speicher 5 des elektrischen Küchengeräts 1 erfolgen soll. Darüber hinaus lässt sich mittels der Aktivierungseinrichtung 10 auch einstellen, ob nur hinsichtlich der Ortsdaten 7 oder der Zeitdaten 6 ein Vergleich stattfinden soll oder hinsichtlich beider Daten 6, 7.

Im Ergebnis sorgt die Auswahleinrichtung 9 bei dieser Vorgehensweise dafür, dass sie nur derartige Informationsdaten 4 aus dem Speicher 5 zur Ausgabe auf der Ausgabeschnittstelle 2 zu lässt, bei denen es Übereinstimmungen zwischen den Metadaten-Zeitdatum 6 bzw. Ortsdatum 7 mit den aktuellen Zeitdaten 13 bzw. den aktuellen Ortsdaten 14 gibt. Neben der automatischen Einstellung der Sprache, mittels derer die Ausgabeschnittstelle 2 sowie die Eingabeschnittstelle 3 betrieben werden (Deutsch, Englisch, ...) können auf diese Weise auch bestimmte Rezepte ausgewählt werden, die aufgrund des aktuellen Aufstellungsortes des elektrischen Küchengeräts 1 bzw. aufgrund des Wochentages, eines bestimmten Feiertages oder der jeweiligen aktuellen Saison für den Benutzer des elektrischen Küchengeräts 1 von besonderem Interesse sind.

### Bezugszeichenliste

- 1: elektrisches Küchengerät
- 2: Ausgabeschnittstelle
- 3: Eingabeschnittstelle
- 4: Informationsdaten
- 5: Speicher
- 6: Zeitdatum
- 7: Ortsdatum
- 8: Erfassungseinrichtung
- 9: Auswahleinrichtung
- 10: Aktivierungseinrichtung
- 11: Zeit-Server
- 12: entfernter Server
- 13: aktuelle Zeitdaten
- 14: aktuelle Ortsdaten
- 15: Internet
- 16: zentrale Steuereinrichtung
- 17: Internet-Router
- 18: Verarbeitungseinheit
- 19: Speicher des entfernten Servers
- 20: Internet-Schnittstelle

## Patentansprüche

1. Elektrisches Küchengerät zur Herstellung von Speisen, vorzugsweise nach vorbestimmten Rezepten, mit einer Ausgabeschnittstelle (2) zur Ausgabe von Informationsdaten (4) an einen Benutzer und einer Eingabeschnittstelle (3) zur Eingabe von Steuerbefehlen zum Steuern des elektrischen Küchengeräts (1) durch den Benutzer, wobei die Informationsdaten (4) in einem mit dem elektrischen Küchengerät (1) verbundenen Speicher (5) abgelegt sind, **dadurch gekennzeichnet, dass** wenigstens einem Teil der Informationsdaten (4) in dem Speicher (5) jeweils ein Zeitdatum (6) und/oder ein Ortsdatum (7) zugeordnet ist und eine Erfassungseinrichtung (8) und eine Auswahleinrichtung (9) vorgesehen sind, wobei mit der Erfassungseinrichtung (8) aktuelle Zeitdaten (13) und/oder aktuelle Ortsdaten (14) erfassbar sind und die Auswahleinrichtung (9) mit dem Speicher (5) und der Erfassungseinrichtung (8) verbunden und ferner derart ausgestaltet ist, dass mit ihr automatisch nur derartige Informationsdaten (4) aus dem Speicher (5) auswählbar sind und zur Ausgabe zulassbar sind, die wenigstens ein Zeitdatum (6) bzw. ein Ortsdatum (7) aufweisen, das mit einem erfassten aktuellen Zeitdatum (13) bzw. aktuellen Ortsdatum (14) übereinstimmt.

2. Elektrisches Küchengerät nach Anspruch 1, **dadurch gekennzeichnet, dass** die Erfassungseinrichtung (8) eine Telefonschnittstelle, eine Internet-Schnittstelle und/oder eine GPS-Schnittstelle aufweist.

3. Elektrisches Küchengerät nach Anspruch 1 oder 2, **dadurch gekennzeichnet, dass** die Auswahleinrichtung (9) eine Aktivierungseinrichtung (10) aufweist, mit der sie vom Benutzer aktivierbar ist, so dass nur nach Aktivierung der Auswahleinrichtung (9) durch den Benutzer eine Auswahl von Informationsdaten (4) durch die Auswahleinrichtung (9) ermöglicht ist.

4. Elektrisches Küchengerät nach Anspruch 3, **dadurch gekennzeichnet, dass** die Auswahleinrichtung (9) derart ausgestaltet ist, dass sie eine getrennte Auswahl nach Zeitdaten (6) einerseits und Ortsdaten (7) andererseits ermöglicht.

5. Elektrisches Küchengerät nach einem der vorherigen Ansprüche, **dadurch gekennzeichnet, dass** der Speicher (5) im oder am elektrischen Küchengerät (1) vorgesehen ist.

6. Elektrisches Küchengerät nach Anspruch 5, **dadurch gekennzeichnet, dass** der Speicher (5) im bzw. am Küchengerät (1) ein Zwischenspeicher zum temporären Halten von Daten ist, der mit einem Speicher (19) eines entfernten Servers (12) zum Austausch der Informationsdaten (4) verbindbar ist.

7. Elektrisches Küchengerät nach einem der vorherigen Ansprüche, **dadurch gekennzeichnet, dass** die den Informationsdaten (4) zugeordneten Ortsdaten (7) wenigstens teilweise Landesdaten sind, wobei die Sprache, in der die jeweiligen Informationsdaten (4) gefasst sind, eine Landessprache des den Landesdaten entsprechenden Landes ist.

8. Elektrisches Küchengerät nach einem der vorherigen Ansprüche, **dadurch gekennzeichnet, dass** die Informationsdaten (4) wenigstens teilweise Rezeptinformationsdaten sind und die den Rezeptinformationsdaten zugeordneten Ortsdaten (7) Regionaldaten umfassen, wobei die Herkunft des jeweiligen Rezeptes der Region entspricht, auf das das jeweilige Regionaldatum hinweist.

9. Elektrisches Küchengerät nach einem der vorherigen Ansprüche, **dadurch gekennzeichnet, dass** die Informationsdaten (4) wenigstens teilweise Rezeptinformationsdaten sind und die den Rezeptinformationsdaten zugeordneten Zeitdaten (6) saisonale Daten umfassen, die einen vorbestimmten Zeitraum innerhalb eines Kalenderjahres umfassen.

## Claims

1. An electrical kitchen appliance for preparing meals, preferably according to predetermined recipes, with an output interface (2) for outputting information data (4) to a user and an input interface (3) for inputting control commands for control of the electrical kitchen appliance (1) by the user, wherein the information data (4) are stored in a memory (5) connected with the electrical kitchen appliance (1), **characterized in that** a respective time data item (6) and/or location data item (7) is allocated to at least a portion of the information data (4) in the memory (5), and an acquisition device (8) and selection device (9) are provided, wherein the acquisition device (8) can be used to acquire current time data (13) and/or current location data (14), and the selection device (9) is connected with the memory (5) and acquisition device (8), and further configured so that it can only be used to automatically select and allow for output those information data (4) from the memory (5) that exhibit at least one time data item (6) or location data item (7) that coincides with an acquired current time data item (13) or current location data item (14).

2. The electrical kitchen appliance according to claim 1, **characterized in that** the acquisition device (8) exhibits a telephone interface, an internet interface and/or a GPS interface.

3. The electrical kitchen appliance according to claim 1 or 2, **characterized in that** the selection device (9) exhibits an activation device (10), with which it can be activated by the user, thereby enabling the selection device (9) to choose information data (4) only after the selection device (9) has been activated by the user.

4. The electrical kitchen appliance according to claim 3, **characterized in that** the selection device (9) is designed to allow a separate selection by time data (6) on the one hand and location data (7) on the other.

5. The electrical kitchen appliance according to one of the preceding claims, **characterized in that** the memory (5) is provided in or on the electrical kitchen appliance (1).

6. The electrical kitchen appliance according to claim 5, **characterized in that** the memory (5) in or on the kitchen appliance (1) is a buffer for temporarily holding data, which can be connected with a memory (19) of a remote server (12) for exchanging the information data (4).

7. The electrical kitchen appliance according to one of the preceding claims, **characterized in that** the location data (7) allocated to the information data (4) are at least partially national data, wherein the language in which the respective information data (4) are formulated is a national language of the country corresponding to the national data.

8. The electrical kitchen appliance according to one of the preceding claims, **characterized in that** the information data (4) consist at least partially of recipe information data, and the location data (7) allocated to the recipe information data encompass national data, wherein the origin of the respective recipe corresponds to the region to which the respective national data item refers.

9. The electrical kitchen appliance according to one of the preceding claims, **characterized in that** the information data (4) consist of recipe information data, and the time data (6) allocated to the recipe information data are seasonal data, which encompass a predetermined period of time within a calendar year.

## Revendications

1. Appareil de cuisine électrique pour la préparation de produits alimentaires, de préférence selon des recettes prédéterminées, avec une interface de sortie (2) pour fournir en sortie des données d'information (4) à un utilisateur et une interface d'entrée (3) pour entrer des instructions de commande pour la commande de l'appareil de cuisine électrique (1) par l'utilisateur, dans lequel les données d'informations (4) sont stockées dans une mémoire (5) reliée à l'appareil de cuisine électrique (1), **caractérisé en ce qu'**au moins à une partie des données d'information (4) dans la mémoire (5) est associée à chaque fois une donnée de temps (6) et/ou une donnée de localisation (7), et sont prévus un dispositif de détection (8) et un dispositif de sélection (9), dans lequel des données de temps actuelles (13) et/ou des données de localisation actuelles (14) peuvent être détectées avec le dispositif de détection (8), et le dispositif de sélection (9) est relié à la mémoire (5) et au dispositif de détection (8), et est configuré en outre de manière que seules de telles données d'informations (4) qui comprennent au moins une donnée de temps (6) ou une donnée de localisation (7) qui coïncide avec une donnée de temps actuelle (13) ou une donnée de localisation actuelle (14) détectée, puissent automatiquement être sélectionnées dans la mémoire (5) par celui-ci et autorisées à être fournies en sortie.

2. Appareil de cuisine électrique selon la revendication 1, **caractérisé en ce que** le dispositif de détection (8) comprend une interface téléphonique, une interface Internet et/ou une interface GPS.

3. Appareil de cuisine électrique selon la revendication 1 ou 2, **caractérisé en ce que** le dispositif de sélection (9) comprend un dispositif d'activation (10) à l'aide duquel il peut être activé par l'utilisateur de manière à rendre possible une sélection de données d'information (4) par le dispositif de sélection (9) seulement après l'activation du dispositif de sélection (9) par l'utilisateur.

4. Appareil de cuisine électrique selon la revendication 3, **caractérisé en ce que** le dispositif de sélection (9) est conçu de manière à permettre une sélection séparée de données de temps (6) d'une part, et de données de localisation (7) d'autre part.

5. Appareil de cuisine électrique selon l'une des revendications précédentes, **caractérisé en ce que** la mémoire (5) est prévue dans ou sur l'appareil de cuisine électrique (1).

6. Appareil de cuisine électrique selon la revendication 5, **caractérisé en ce que** la mémoire (5), dans ou sur l'appareil de cuisine (1), est une mémoire tampon pour conserver temporairement des données, qui peut être reliée à une mémoire (19) d'un serveur distant (12) pour l'échange des données d'information (4).

7. Appareil de cuisine électrique selon l'une quelconque des revendications précédentes, **caractérisé en ce que** les données de localisation (7) associées aux données d'information (4) sont au moins en partie des données de pays, dans lequel la langue dans laquelle les données d'information respectives sont saisies, est une langue nationale du pays correspondant aux données de pays.

8. Appareil de cuisine électrique selon l'une des revendications précédentes, **caractérisé en ce que** les données d'information (4) sont au moins en partie des données d'information de recette et les données de localisation (7) associées aux données d'information de recette comprennent des données régionales, dans lequel l'origine de la recette respective correspond à la région à laquelle se réfère la donnée régionale respective.

9. Appareil de cuisine électrique selon l'une des revendications précédentes, **caractérisé en ce que** les données d'information (4) sont au moins en partie des données d'information de recette et les données de temps (6) associées aux données d'informations de recette comprennent des données saisonnières qui comprennent une période prédéterminée au sein d'une année civile.
